# EUROPÄISCHE PATENTANMELDUNG

(11) **EP 0 772 102 A2**
(43) Veröffentlichungstag der Anmeldung: **07.05.1997**
(21) Anmeldenummer: 96111863.5
(22) Anmeldetag: 23.07.1996
(51) Int. Cl.: G03H 1/04, B42D 15/10, G06K 19/16

(54) **Verfahren zur Herstellung von nachahmungssicheren, Echtheitsmerkmale aufweisenden Hologrammen und Lesegerät zum Prüfen der Echtheit**

(30) Priorität: 03.11.1995 DE 19541071
(71) Anmelder: BUNDESDRUCKEREI GmbH, 10969 Berlin (DE)
(72) Erfinder: Dausmann, Günther, 85435 Erding (DE); Gnädig, Klaus, Dr., 81247 München (DE); Yang, Zishao, Dr., 85435 Erding (DE)
(74) Vertreter: Gossel, Hans K., Dipl.-Ing.

(57) **Zusammenfassung**

Die Erfindung betrifft ein Verfahren zur Herstellung von nachahmungssicheren, Echtheitsmerkmale aufweisenden Hologrammen, die Kopien eines Masterhologramms sind. Erfindungsgemäß wird das Masterhologramm ein Hologramm eines zufällig strukturierten optischen Elements, beispielsweise einer Mattscheibe oder eines Diffusors, das das Echtheitsmerkmal bildet, mit einer Optik aufgenommen, die zu einem Hologramm mit einem Muster aus zueinander parallelen Linien führt.

## Beschreibung

Die Erfindung betrifft ein Verfahren zur Herstellung von nachahmungssicheren, Echtheitsmerkmale aufweisenden Hologrammen, die die Kopien eines Masterhologramms sind, und ein Lesegerät zum Prüfen der Echtheit der nach diesem Verfahren hergestellten Hologramme.

Hologramme werden insbesondere in Form von Prägehologrammen zunehmend auf Ausweispapieren und zur Sicherung der Echtheit auf Markenartikeln verwendet. Ihre gewünschte Schutzfunktion können die Hologramme aber nur gewähren, wenn sie auch von geschickten und geübten Fälschern nicht mit üblichen holographischen Hilfsmitteln nachgeahmt werden können.

Aufgabe der Erfindung ist es, ein Verfahren der eingangs angegebenen Art zu schaffen, nach dem sich nachahmungssichere Hologramme herstellen lassen, die als Echtheitsnachweis auf Gegenständen und Dokumenten aller Art verwendet werden können und die sich in Lesegeräten zuverlässig und schnell auf ihre Echtheit überprüfen lassen.

Erfindungsgemäß wird diese Aufgabe dadurch gelöst, daß als Masterhologramm ein Hologramm eines zufällig strukturierten optischen Elements, beispielsweise einer Mattscheibe oder eines Diffusors, das das Echtheitsmerkmal bildet mit einer Optik aufgenommen wird, die zu einem Hologramm mit einem Linienmuster führt.

Bei der Echtheitsprüfung von Hologrammen ist es grundsätzlich erforderlich, diese in eine Prüfposition zu bringen, in der sie entsprechend der Mikrostruktur ihres Interferenzmusters ausgerichtet sind, was sich grundsätzlich nur mit einem großen Aufwand erreichen läßt. Das nach dem erfindungsgemäßen Verfahren hergestellte Hologramm weist ein aus zueinander parallelen Linien bestehendes Linienmuster auf, so daß es bei der Rekonstruktion des zu prüfenden Hologramms gegen Verschiebungen in Richtung der Linien relativ unempfindlich ist. Wird nun das parallel zu den Linien des Linienmusters ausgerichtete Hologramm bei der Rekonstruktion des zu prüfenden Hologramms quer zu den Linien bewegt, wird einmal die richtige Prüfposition erreicht, so daß die der Echtheitsprüfung dienenden Merkmale aufblitzen und dieses Aufblitzen erfaßt werden kann.

Nach einer bevorzugten Ausführungsform des erfindungsgemäßen Verfahrens besteht die Optik zur Aufnahme des Masterhologramms aus einem System, in dem der Objektstrahl durch eine Zylinderlinse auf dem Diffusor oder der Mattscheibe linienförmig abgebildet und durch eine nachgeschaltete Abbildungsoptik (Fourier- Linse) die Objektstrahlwelle etwa parallel gerichtet und auf der Hologrammebene mit einem Referenzstrahl zur Interferenz gebracht wird, so daß auf dem in der Hologrammebene angeordneten Fotomaterial das Masterhologramm in Form eines Musters von parallelen Linien entsteht.

Das erfindungsgemäß in dem Masterhologramm codierte zufällig strukturierte optische Element, beispielsweise eine Mattscheibe oder eine statistische Phasenplatte mit Zufallsverteilung der Phasenelemente, läßt sich auch von einem geschickten Fälscher nicht nachstellen, weil er hierzu das zweckmäßigerweise nach der Aufnahme vernichtete optische Element benötigt, welches aber nicht verfügbar ist und wegen seiner zufälligen Strukturen auch nachträglich nicht hergestellt werden kann. Durch das Masterhologramm, das eine Hologrammaufnahme eines zufällig strukturierten optischen Elements ist, wird ein Nachahmen durch Nachstellen verhindert.

Aus dem ausgehend von dem Masterhologramm hergestellten Sicherheitshologrammen, die Kopien des Masterhologramms sind, kann ein Fälscher praktisch nicht das identische Masterhologramm rekonstruieren, da er hierzu den bei der Aufnahme der Sicherheitshologramme verwendeten Referenzstrahl benötigt, der zusätzlich auch in nicht-reproduzierbarer Weise leicht verzerrt werden kann.

Die erfindungsgemäßen Sicherheitshologramme können als Reflexionshologramme oder aber auch als Transmissionshologramme aufgenommen werden.

Zur Massenherstellung von dem Echtheitsnachweis dienenden Sicherheitshologrammen wird aus dem Masterhologramm beispielsweise nach bekannten Verfahren ein Prägestempel hergestellt und mit diesem können die Sicherheitshologramme nach ebenfalls bekannten Verfahren in aluminisierte oder aber auch transparente Kunststoffschichten geprägt werden.

Um die erfindungsgemäßen Sicherheitshologramme auch kopiersicher zu machen, können bekannte Kopiersicherungen vorgesehen werden. Ein wirksamer Schutz gegen Kopieren ergibt sich beispielsweise daraus, daß die Sicherheitshologramme in eine mit Farbverläufen versehene Folie geprägt werden.

Da die aus dem erfindungsgemäß hergestellten Masterhologramm hergestellten Massenhologramme eine verschlüsselte Hologramminformation besitzen, müssen besondere Lesegeräte geschaffen werden, mit denen sich die Hologramme als echt erkennen lassen.

Derartigte Lesegeräte müssen sich zu vertretbaren Preisen herstellen lassen und sie müssen eine einfache und schnelle Überprüfung der dem Echtheitsnachweis dienenden Hologramme ermöglichen.

Ein derartiges Lesegerät zum Prüfen der Echtheit von aus dem Masterhologramm hergestellten Hologrammkopien zeichnet sich erfindungsgemäß dadurch aus, daß in einer vorgegebenen optischen Anordnung mit einem Laser, vorzugsweise mit einer Laserdiode, ein Hologramm (Entschlüsselungs- oder Lesehologramm) des Masterhologramms mit einem Referenzstrahl hergestellt wird, der eine lesbare Information, vorzugsweise eine charakteristische Energieverteilung besitzt, daß das Lesegerät identisch die bei der Aufnahme verwendete optische Anordnung besitzt, wobei die zu prüfende Hologrammkopie an die Stelle des Masterhologramms bei der Herstellung des Entschlüsselungshologramms gebracht wird, daß das zu prüfende Hologramm mit dem bei der Herstellung des Entschlüsselungshologramms verwendeten Rekonstruktionsstrahl beaufschlagt wird und der von dem rekonstruierten Strahl aus dem Lesehologramm rekonstruierte Strahl über eine Sammellinse, eine Streulinse und eine Zylinderlinse oder einen Zylinderlinsenraster (Lentikular oder eindimensionaler Diffusor) einen die Lichtintensität erfassenden Sensor beaufschlagt. Bei dem die Lichtintensität erfassenden Sensor kann es sich um einen CCD-Sensor handeln, deren Sensorelemente in einer Reihe angeordnet sind.

In dem erfindungsgemäßen Lesegerät rekonstruiert ein echtes zu prüfendes Hologramm aus dem Lesehologramm den bei der Aufnahme des Lesehologramms verwendeten neuen Referenzstrahl, der zweckmäßigerweise eine zypische Energieverteilung aufweist. Die Sammellinse verringert den Durchmesser der rekonstruierten Lesewelle, die dann durch dann die Streulinse parallelisiert wird, wenn sie auf einen genügend kleinen Durchmesser gebracht worden ist.

Die Kombination von Sammellinse und Streulinse ist als Galilei-Fernrohr bekannt. Damit nun die rekonstruierte Lesewelle auf ihre typische Energieverteilung überprüft werden kann, wird sie durch die Zylinderlinse auseinandergezogen, so daß die Längsachse des auseinander gezogenen Strahls mit Sicherheit die quer zu dieser ausgerichtete Längsachse des Sensors schneidet.

Nur ein echtes zu prüfendes Hologramm rekonstruiert aus dem Lesehologramm die Lesewelle mit der als Echtheitsmerkmal dienenden Energieverteilung, so daß diese Energieverteilung von dem Sensor erfaßt wird und dann ein Echtheitssignal bildet.

Laserstrahlen haben die Eigenart, daß sie sogenannte Speckle oder eine Granulation aufweisen, d.h. sie enthalten eine Körnung mit hellen und dunklen Flecken. Trifft nun ein derartiger dunkler Fleck auf den Sensor, wird selbst bei Echtheit des zu prüfenden Hologramms eine Fehlmeldung gegeben. Um die Granulation auszuschalten, wird in weiterer Ausgestaltung der Erfindung eine rotierende Glasplatte vorgesehen, die die Granulation ausmittelt, so daß der Detektor die Energieverteilung erfassen kann. Zweckmäßigerweise rotiert die Glasplatte mit einer auf die Frequenz des Detektors abgestimmten Frequenz.

Andere Methoden der Granulationsunterdrückung sind ebenfalls anwendbar. So kann beispielsweise ein Flächensensor anstelle eines linearen CCD-Sensors verwendet werden und die Granulation durch Mittelung über die einzelnen Reihen der Detektorelemente beseitigt werden.

In weiterer Ausgestaltung der Erfindung ist vorgesehen, daß das zu prüfende Hologramm im Lesegerät schwenkbar um eine zu den Hologrammlinien parallele Achse gelagert und mit einem Schwenkantrieb versehen ist. Das zu prüfende Hologramm muß kantengerade in dem Lesegerät ausgerichtet sein, wobei eine genaue Ausrichtung in Richtung der Hologrammlinien nicht erreicht zu werden braucht. Wird nun das zu prüfende Hologramm während des Prüfvorganges derart bewegt oder verschwenkt, daß die Hologrammlinien quer zu deren Längsrichtung bewegt werden, kommt das Hologramm einmal in seine genaue Prüflage, so daß ein echtes Hologramm ein Aufblitzen des Lesestrahls mit der typischen Energieverteilung bewirkt, das dann von dem Detektor erfaßt werden kann.

Ein Ausführungsbeispiel der Erfindung wird nachstehent anhand der Zeichnung näher erläutert. In dieser zeigt
- Fig. 1: die Anordnung der optischen Elemente in dem System zur Aufnahme des Masterhologramms in schematischer Darstellung,
- Fig. 2: die optische Anordnung zur Aufnahme des Entschlüsselungs- oder Lesehologramms in dem Lesegerät in schematischer Darstellung,
- Fig. 3: die Anordnung der optischen Elemente des optischen Systems in dem Lesegerät zur Überprüfung der Echtheit zu prüfender Hologramme in schematischer Darstellung und
- Fig. 4: eine Draufsicht auf den von dem Prüfstrahl beaufschlagten Sensor.

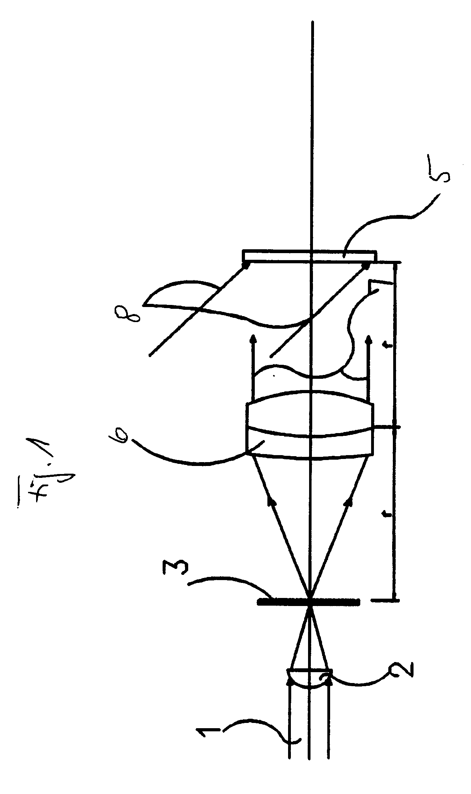

Anhand der Fig. 1 wird nun die Aufnahme des Masterhologramms beschrieben, das als Vorlage für die Massenherstellung der dem Echtheitsnachweis dienenden Hologramme und zur Herstellung des Lesehologramms in dem Lesegerät verwendet wird.

Ein Laserstrahl 1 passiert eine Zylinderlinse 2, die auf der Mattscheibe 3, die ein zufällig strukturiertes optisches Element darstellt, den Objektstrahl linienförmig 4 abbildet. Zwischen der Mattscheibe 3 und der Hologrammplatte 5, die aus einem lichtempfindlichen Fotomaterial besteht, ist im Abstand f sowohl von der Mattscheibe als auch der Hologrammplatte 5 eine Fourier-Linse 6 angeordnet, die die auf der Mattscheibe 3 linienförmig gebündelten Objektstrahlen in eine parallele Strahlenfront 7 umwandelt. Diese parallele Strahlenfront interferiert auf dem Fotomaterial der Hologrammplatte 5 mit dem Referenzstrahl 8, so daß auf dem Fotomaterial ein aus parallelen Linien bestehendes Hologramm aufgezeichnet wird, wobei sich das Linienmuster aus den unterschiedlichen Ortsfrequenzen ergibt.

Das in der Hologrammebene 5 aufgenommene Masterhologramm enthält die Abbildung der Mattscheibe 3, wobei die zufällige Verteilung der Phasenelemente dem Echtheitsnachweis dient.

In Fig. 1 ist das optische System in Draufsicht dargestellt.

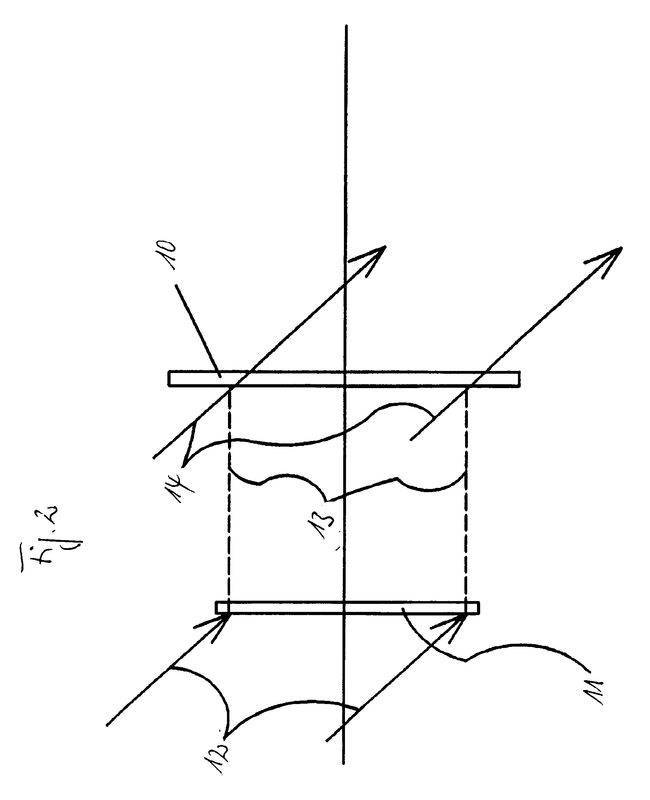

Das Lesegerät bzw. dessen Herstellung wird nun anhand der Fig. 2 bis 4 erläutert.

In dem Lesegerät wird sodann aus dem Masterhologramm 5 oder einer Kopie des Masterhologramms das Lese- oder Entschlüsselungshologramm 10 hergestellt, das später in dem Lesegerät an derselben Stelle verbleibt, an der es aufgenommen worden ist. Zur Aufnahme des Lesehologramms wird das Lesegerät an die Stelle, an der später auch die zu prüfenden Hologramme angeordnet werden, das echte Hologramm 11 gesetzt, das also dem Masterhologramm oder einer Hologrammkopie entspricht. Aus dem Hologramm 11 wird sodann mit einem gerätetypischen Laser-Rekonstruktionsstrahl 12 eine Welle 13 rekonstruiert, die mit einem gerätetypischen Referenzstrahl 14 auf das in der Hologrammebene 10 angeordnete Fotomaterial aufgezeichnet wird. Das so hergestellte Hologramm 10 bildet sodann das Lesehologramm.

Bei dem Hologramm 11 kann es sich um ein Reflexions- oder ein Transmissionshologramm handeln. Beispielhaft ist in Fig. 2 ein Transmissionshologramm dargestellt.

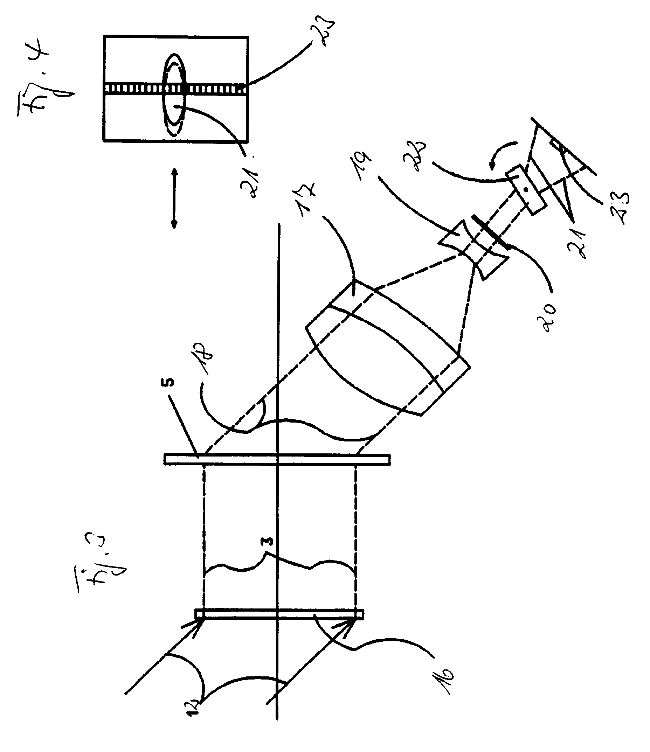

Das komplette Lesegerät wird nun anhand der Fig. 3 in seinem grundsätzlichen Aufbau beschrieben.

Das zu prüfende Hologramm 16 wird in eine Halterung eingelegt, in der es kantengerade oder winkelgerecht gehaltert und sich ungefähr genau in der Position befindet, in der sich das Hologramm 11 bei der Aufnahme des Lesehologramms 10 befunden hat. Hinter dem Lesehologramm 10 ist in dem aus diesem rekonstruierten Strahl eine Sammellinse 17 angeordnet, die den rekonstuierten Strahl 18 auf einen geringeren Durchmesser komprimiert. Der entsprechend zusammengeführte Strahl trifft sodann auf die Streulinse 19, die einen parallelen Strahl geringen Durchmessers erzeugt. Dieser Strahl wird sodann durch eine Zylinderlinse oder ein Zylinderlinsenraster 20 (Lentikular oder ein-dimensionaler Diffusor) linienartig 21 auseinandergezogen, wie es aus Fig. 4 ersichtlich ist. Dieser linienartig auseinandergezogene Strahl 21 trifft sodann auf die rotierende Glasplatte 22, die Rechteckform besitzen kann. Durch die Rotation der Glasplatte 22 wird die Granulation des Laserstrahls ausgemittelt, so daß auf den Detektor 23 in der aus Fig. 4 ersichtlichen Weise ein quer zu diesem ausgerichteter linienförmiger Strahl 21 trifft, in dem die Granulation ausgeglichen ist. Der Sensor 23 besteht in dem beschriebenen Ausführungsbeispiel aus in einer Reihe angeordneten lichtempfindlichen Elementen (CCD-Sensor).

Die Halterung des zu prüfenden Hologramms 6 ist um eine Achse durch einen Antrieb verschwenkbar, die parallel zu den Linien des Linienmusters des Hologramms liegt. Wird nun während des Prüfvorganges das zu prüfende Hologramm 16 geschwenkt, kommt das Hologramm einmal in die richtige Prüfposition, so daß der aus dem Hologramm 16 rekonstruierte Strahl aus dem Lesehologramm 10 den zu dessen Aufnahme verwendeten Strahl 14 rekonstruiert, der eine bestimmte Energieverteilung besitzt, die von dem Sensor 22 erfaßt werden kann.

Die Zylinderlinse 20, bzw. das Zylinderlinsenraster oder der eindimensionale Diffusor, zieht den Prüfstrahl 21 soweit auseinander, daß dieser immer den Sensor 23 schneidet.

## Patentansprüche

1. Verfahren zur Herstellung von nachahmungssicheren, Echtheitsmerkmale aufweisenden Hologrammen, die Kopien eines Masterhologramms sind,
dadurch gekennzeichnet,
daß als Masterhologramm ein Hologramm eines zufällig strukturierten optischen Elements, beispielsweise einer Mattscheibe oder eines Diffusors, das das Echtheitsmerkmal bildet, mit einer Optik aufgenommen wird, die zu einem Hologramm mit einem Muster aus zueinander parallelen Linien führt.

2. Verfahren nach Anspruch 1, dadurch gekennzeichnet, daß die Optik aus einem System besteht, in dem der Objektstrahl durch eine Zylinderlinse auf dem Diffusor oder der Mattscheibe linienförmig abgebildet und in dem durch eine nachgeschaltete Abbildungsoptik die Objektwelle etwa parallelgerichtet und auf dem lichtempfindlichen Material in der Hologrammebene mit einem Referenzstrahl zur Interferenz gebracht wird, so daß auf dem in der Hologrammebene angeordneten Fotomaterial das Masterhologramm in Form eines Musters von parallelen Linien aufgenommen wird.

3. Lesegerät zum Prüfen der Echtheit der nach dem Verfahren gemäß den Ansprüche 1 oder 2 hergestellten Hologrammkopien,
dadurch gekennzeichnet,
daß in einer vorgegebenen optischen Anordnung mit einem Laser, vorzugsweise mit einer Laserdiode, ein Hologramm (Entschlüsselungs- oder Lesehologramm) des Masterhologramms mit einem Referenzstrahl hergestellt wird, der eine lesbare Information, vorzugsweise eine charakteristische Energieverteilung besitzt, daß das Lesegerät identisch die bei der Aufnahme verwendete optische Anordnung besitzt, wobei die zu prüfende Hologrammkopie an die Stelle des Masterhologramms bei der Herstellung des Lesehologramms gebracht wird, daß das zu prüfende Hologramm mit dem in der Herstellung des Lesehologramms verwendeten Rekonstruktionsstrahl beaufschlagt und der von dem rekonstruierten Strahl aus dem Lesehologramm rekonstruierte Strahl über eine Sammellinse, eine Streulinse und eine Zylinderlinse oder ein Linsenraster oder einen eindimensionalen Diffusor einen die Lichtintensität erfassenden Sensor beaufschlagt.

4. Lesegerät nach Anspruch 3, dadurch gekennzeichnet, daß zwischen der Zylinderlinse und dem Sensor eine rotierend angetriebene Glasplatte angeordnet ist.

5. Lesegerät nach Anspruch 3 oder 4, dadurch gekennzeichnet, daß das zu prüfende Hologramm in dem Lesegerät schwenkbar um eine zu den Hologrammlinien des zu prüfenden Hologramms parallele Achse gelagert und mit einem Schwenkantrieb versehen ist.

6. Lesegerät nach einem der Ansprüche 3 bis 5, dadurch gekennzeichnet, daß zwischen der Zylinderlinse, dem Zylinderlinsenraster oder dem eindimensionalen Diffusor und dem Sensor eine rotierende Glasplatte oder ein Flächensensor, der die Granulation durch Mittelung über die einzelnen Reihen der Detektorelemente beseitigt, angeordnet ist.
